Europäisches Patentamt

European Patent Office

Office européen des brevets

(11) Publication number: **0 447 776 A2**

# EUROPEAN PATENT APPLICATION

(21) Application number: 91101549.3

(51) Int. Cl.5: **G05B 19/05**

(22) Date of filing: **05.02.91**

(30) Priority: **19.03.90 JP 67011/90**

(43) Date of publication of application:
**25.09.91 Bulletin 91/39**

(84) Designated Contracting States:
**CH DE ES FR GB IT LI NL**

(71) Applicant: **HITACHI, LTD.**
**6, Kanda Surugadai 4-chome**
**Chiyoda-ku, Tokyo 101(JP)**

(72) Inventor: **Kurokawa, Naohiro**
**1023 Ooaza Tagai**
**Shibata-shi, Niigata(JP)**

(74) Representative: **Strehl, Schübel-Hopf,**
**Groening**
**Maximilianstrasse 54 Postfach 22 14 55**
**W-8000 München 22(DE)**

(54) **Programmable controller.**

(57) A programmable controller comprises an input portion (11) for receiving an input signal from an object of control and a processing unit (72) for performing processing under a control program. The processing unit (72) generates an input information holding signal at the beginning of each scanning cycle. The holding signal causes input holding means (10) interposed between the input portion (11) and the processing unit (72) to hold the input information. This scheme keeps the input information unchanged during each scanning cycle, thus improving the reliability of processing through prevention of processing errors.

FIG. 1

## BACKGROUND OF THE INVENTION:

The present invention relates to a programmable controller and, more particularly, to a controller adapted to improve the reliability of processing.

Programmable controllers carry out their processing on a time series basis according to the previously stored control program (called the sequence program). Given one input signal, the information (ON or OFF) at the beginning of the program execution may differ from the information at the end thereof (where time has elapsed since the beginning). In that case, the conflicting information over time may result in malfunction.

One solution to the above disadvantage, disclosed in Japanese Patent Laid-open No. 62-117001, is to temporarily store the input information in an image memory (RAM) and to have the stored contents processed in and output from that memory. Where high-speed processing is required, instruction words written in the sequence program are executed on a direct input basis, i.e., without the intervention of the image memory.

One disadvantage of the above-described prior art solution is a low level of responsiveness to the I/O information that requires high-speed processing. This is because it takes time to carry out the I/O processing usually on all information admitted. Another disadvantage of the prior art is that in high-speed processing, some of the externally supplied signals (i.e., input information) are ignored if the signals have a width narrower than a single scanning cycle or if the signals are input with a timing different from that for processing the instruction words.

One method for handling input signals whose width is narrower than one scanning cycle is proposed in Japanese Patent Laid-open No. 90-238902. This method involves latching input signals at any time regardless of the scanning timing. One disadvantage of this prior art method is that if a signal is input halfway through a scanning cycle, the input signal information before the cycle may differ from that in effect thereafter. The conflicting information can thus cause malfunction.

## SUMMARY OF THE INVENTION:

It is therefore an object of the present invention to provide a programmable controller that boosts the reliability of processing by preventing malfunctions when given signals whose width is narrower than one scanning cycle.

In achieving the foregoing and other objects of the invention and according to one aspect thereof, there is provided a programmable controller comprising: a first memory for storing a system program; a second memory for storing a control program; a processing unit for carrying out processing in accordance with the control program; an input portion for receiving an input signal from an object of control; an output portion for supplying an output signal to an external load; and an I/O controller containing a holding signal generating means for generating an input information holding signal at the beginning of a scanning cycle, and an input holding means for holding input information from the input portion, wherein the holding signal is supplied to the input holding means at the beginning of a scanning cycle so that the input information is being stored in the holding means during the scanning cycle.

With this programmable controller, the holding signal is generated at the beginning of each scanning cycle, and the information coming from the input portion at that point is held in the input holding means. This makes it possible to hold during one scanning cycle any signal whose width is shorter than the cycle. The same results of processing obtained with different signal timings make the programmable controller according to the invention more reliable than ever in processing.

## BRIEF DESCRIPTION OF THE DRAWINGS:

Fig. 1 is an overall block diagram of a programmable controller embodying the present invention;

Fig. 2 is a block diagram showing major components of the embodiment;

Fig. 3 is a detailed view of an I/O controller contained in the embodiment;

Fig. 4 is a view describing typical address assignments of the I/O controller in the embodiment;

Fig. 5 is a view depicting an input/output process of the embodiment;

Fig. 6 is a set of timing charts illustrating a holding signal, an input signal and an output signal from a memory operation point of view;

Fig. 7 is a set of tables showing typical address assignments of the I/O controller; and

Fig. 8 is a set of views depicting typical word information for the embodiment.

## DESCRIPTION OF THE PREFERRED EMBODIMENT:

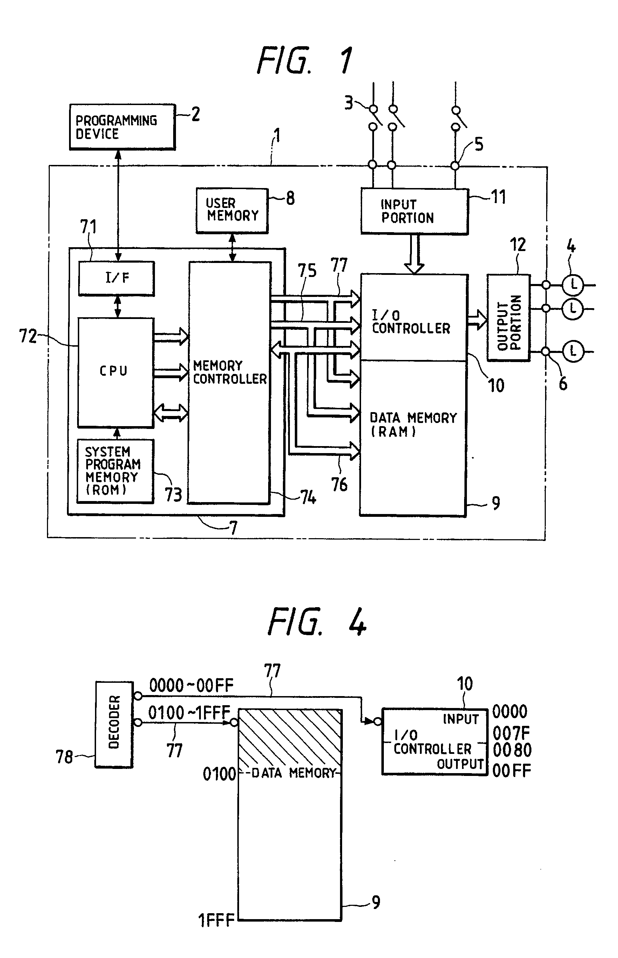

One preferred embodiment of the present invention will now be described with reference to Figs. 1 through 8.

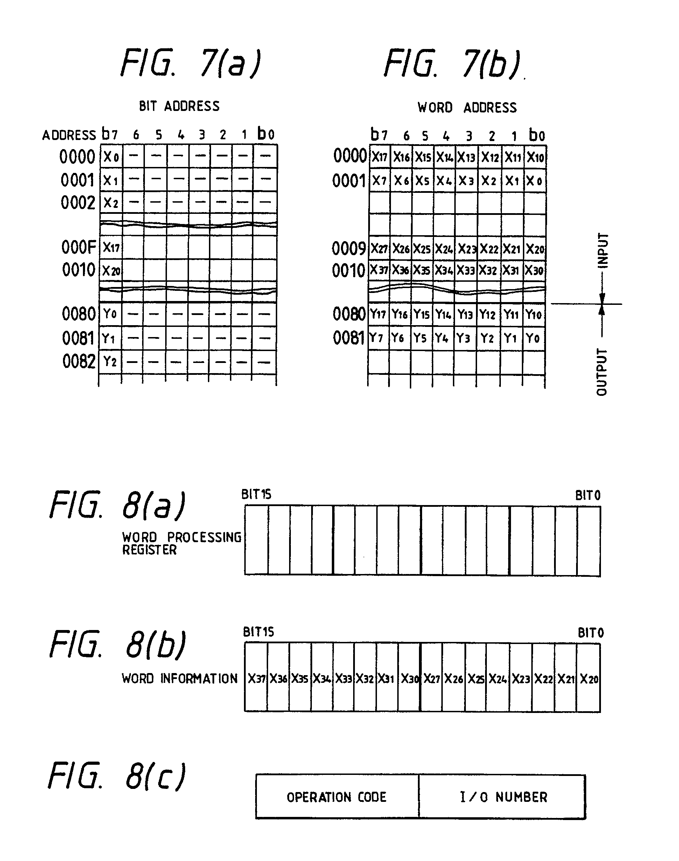

Fig. 1 is an overall block diagram of the embodiment. In Fig. 1, reference numeral 1 is a programmable controller proper; 2 is a programming device with which a user inputs a sequence program to the programmable controller 1; 3 is an external input device that is an information source (limit switch, sensor, etc.); 4 is an external load (bulb, lamp, relay, etc.); 5 and 6 are I/O terminals which, attached to the programmable controller 1, connect it to the external input device 3 and external load 4, respectively; and 7 is a processing controller. The processing controller 7 contains a transmission interface 71 for data transmission to and from the programming device 2, a CPU 72 for controlling various parts via a memory controller in logical and arithmetic operations, and a system program memory 73 which is a first memory for storing the data contents and procedures for controlling the CPU 72. Reference numeral 8 is a user memory which is a second memory for storing the sequence program that is input through the programming device 2. The second memory 8 stores intermediate words each constituted by an instruction code and an I/O number, as illustrated in Fig. 8 (C). Reference numeral 9 is a data memory which is a third memory for storing the results of processing based on the sequence program. The data memory 9 is also called an internal output or an internal relay constituting a RAM to and from which data may be written and read.

Further in Fig. 1, reference numeral 11 is an input portion for removing chattering from the input signal received from the external input device 3, the chattering-free signal being sent as input information to the inside. Reference numeral 12 is an output portion for generating an output signal that drives the external load 4. Reference numeral 10 is an I/O controller specific to the invention. Besides being connected to the input portion 11 and output portion 12, the I/O controller 10 is connected to the processing controller 7 through a plurality of address lines 75, a plurality of data lines 76, and a plurality of control lines 77 used to control both the I/O controller 10 and the data memory 9.

A memory controller 74 operates under control of the CPU 72 in accordance with the program stored in the system program memory 73. Under control of the memory controller 74, the sequence program is written to the user memory 8 and the result of processing is written to and read from the data memory 9. The memory controller 74 also generates control signals for the I/O controller 10.

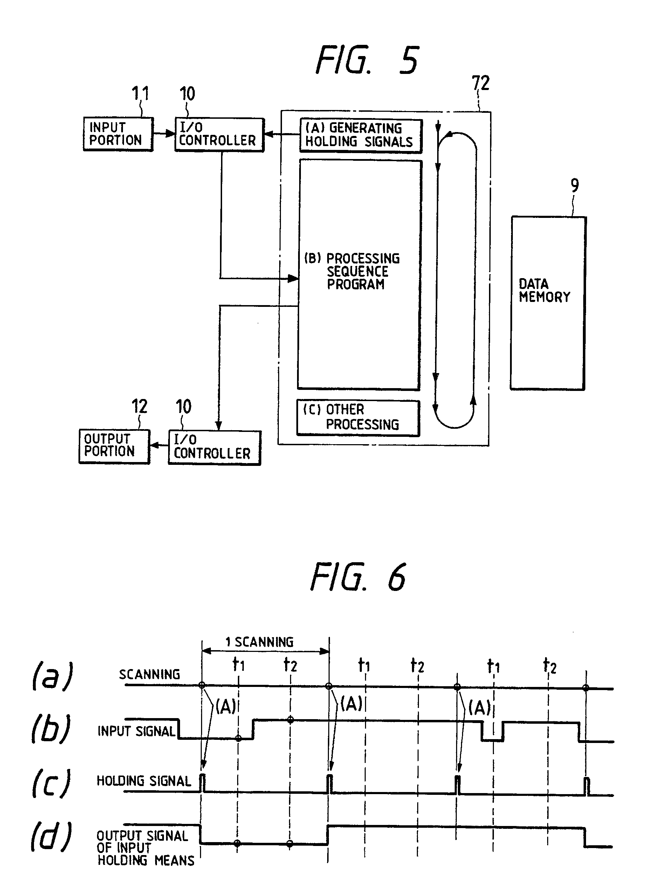

Fig. 4 illustrates typical address assignments for the I/O controller. A total of 256 addresses for use by the I/O controller 10 are assigned to the shaded area of the data memory 9. The I/O controller 10 and the data memory 9, either of which is selected by a decoder 78 incorporated in the memory controller 74, have contiguous address assignments as indicated. The low address area (shaded in the figure) of the data memory 9 is not used for data storage; the area has the addresses (0000 - 00FF) of the I/O controller 10 assigned thereto so that three-state buffers 103 - 106 or latches 113 - 114 may be accessed thereby.

Because the three-state buffers 103 - 106 and latches 113 and 114 are given the addresses equivalent to those of the data memory 9, direct access is made possible to these parts during processing so that the signals stored therein may be read directly therefrom. This arrangement thus shortens the access time involved.

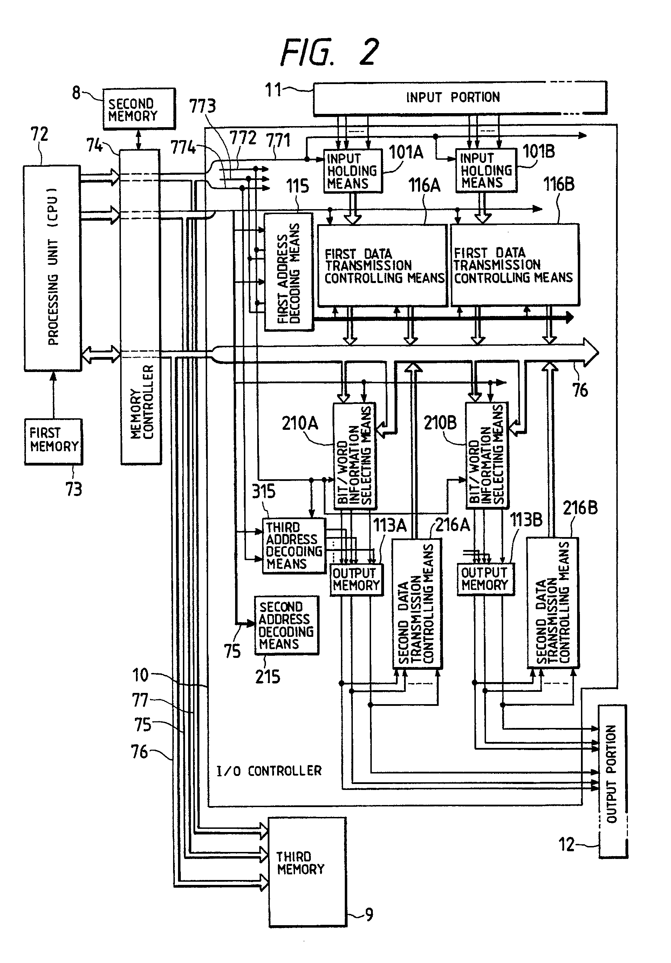

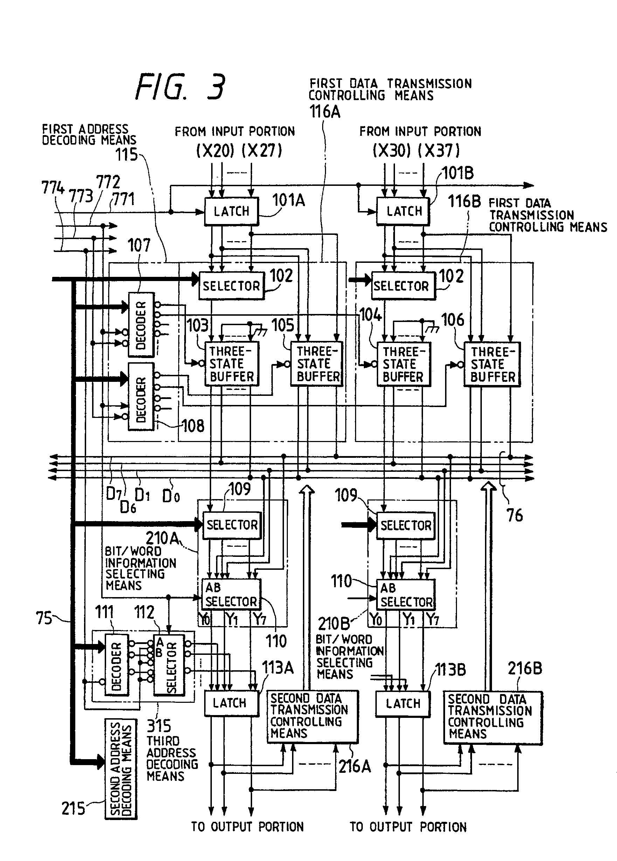

Fig. 2 is a block diagram showing the major parts of the embodiment, and Fig. 3 is a detailed block diagram of the I/O controller 10 of the embodiment. The setups in these figures correspond to one word (16 bits).

With this embodiment, as shown in Fig. 2, the input side of the I/O controller 10 has input holding means 101A and 101B to which input information is supplied from the input portion 11, as well as first data transmission controlling means 116A and 116B for controlling the transmission of the information held by the means 101A and 101B onto the data lines 76. Either or both of the first data transmission controlling means 116A and 116B are selected by a first address decoding means 115. If an instruction code encountered in the program is for bit processing, the information is transmitted onto the data lines 76 via the first data transmission controlling means 116A or 116B, whichever is selected. If an instruction code in the program is for word processing, the information is transmitted onto the data lines 76 via the first data transmission controlling means 116A and 116B, both of which are selected.

The output side of the I/O controller 10 has bit/word information selecting means 210A and 210B for selecting the type of information, i.e., bit or word information, to be output onto the data lines 76. The output from the bit/word information selecting means 210A and 210B is transmitted to the output portion 12 via output memories 113A and 113B. A third address decoding means 315 generates a memory command signal and supplies it to the output memories 113A and 113B. In turn, the output memories 113A and 113B store output signals from the bit/word information selecting means 210A and 210B, respectively.

The output of the output memories 113A and 113B is placed onto the data lines 76 via second data transmission controlling means 216A and 216B and is stored in the third memory 9. The second data transmission controlling means 216A and 216B are controlled by the output of the second address decoding means 215. The second address decoding means 215 is the same in construction and connection arrangements as the first address decoding means, and the second data transmission controlling means 216A and 216B are also the same in construction and connection arrangements as the first data transmission controlling means 116A and 116B (illustrations omitted for this reason from Figs. 2 and 3).

A detailed construction of the components in the embodiment will now be described with reference to Fig. 3. Reference numerals 101A and 101B are latch elements that simultaneously store pieces of input information from the input portion 11 at a leading (or trailing) edge of a holding signal on an input information holding signal line 771. At the beginning of a scanning cycle, the holding signal is sent from the CPU 72 in the processing controller 7 onto the input information holding signal line 771 via the memory controller 74. The holding signal is then supplied to the latch elements 101A and 101B that constitute the input holding means. The scanning start timing, the output timing of the input information holding signal and other relevant information are stored in the system program memory 73.

Timing relations between input information and the holding signal will now be described with reference to Figs. 5 and 6. With this embodiment, as depicted in Fig. 5, processing (A) is performed at the beginning of a scanning cycle to generate a holding signal, followed by sequence program processing (B) and other processing (C) in that order. In Fig. 6, charts (A), (B), (C) and (D) show the timings of a scanning cycle, an external input signal, a holding signal and an output signal of the input holding means, respectively. As illustrated in Fig. 6 (B), when the external input signal is at the High (1) or Low (0) level, the input holding means 101A and 101B maintain their output at that level of the external input signal in effect when the holding signal is generated. That signal level is held during one scanning cycle. When the external input signal is admitted at points $t_1$ and $t_2$ during the scanning cycle, the data value remains unchanged. Because there occurs no conflict in the result of processing, malfunctions are prevented and the reliability of the processing is enhanced. In particular, even if the cycle of an external input signal is shorter than one scanning cycle, that signal is held intact during the scanning cycle so that any change in the data value is prevented during the scanning.

As described, the holding signal from the input information holding signal line 771 causes input information to be held simultaneously at a first pulse of one scanning cycle. This shortens the time required to store large volumes of information coming from an external device. In addition, timing and time-series divergences are prevented during execution of the sequence program. The use of the latch elements 101A and 101B simplifies the hardware construction. The information in the latches is read out by specifying an address of the three-state buffers 103 - 106.

The signal output from the input holding means is supplied to the first data transmission controlling means 116A and 116B. Since the first data transmission controlling means 116A and 116B are identical to each other in construction, one of them is mainly described herein. Reference numeral 102 in Fig. 3 is a selector that selects one piece of input information (bit information) using one of the address lines 75 carrying multiple pieces of input information from the latch elements 101. Reference numerals 103 and 104 designate gate means, i.e., three-state buffers, which open and close to control the transmission to the data lines 76 of the above-selected one piece of information and information "0," the latter having being supplied to the other bit (signal ON/Off information). A decoder 107 generates a signal whereby one buffer is always selected.

The three-state buffers 103 - 106 each have a switching function; they take either a conductive or non-conductive (i.e., high impedance) state between input and output. A control terminal arrangement is used to control the conductance state of these buffers. With this embodiment, the buffers are made conductive or non-conductive by the signal from the decoder 107 or 108 of the first address decoding means 115.

The above-selected one piece of input information is transmitted to D7, the highest bit of the data lines 76. The other OFF information is transmitted to D6 through D0.

The three-state buffers 105 and 106 control the transmission of the output from the latch elements 101 onto the data lines 76. A plurality of pieces of input information may be placed onto the data lines 76. For this embodiment, eight data lines 76 are provided (D0 - D7). In Fig. 3, part of the data lines are omitted from the illustration. The output of the buffer 105 is connected to the data lines 76 in such a way that input information X27 in the high-order bit of the latch elements 101 corresponds to D7 of the data lines 76 and input information X27 in the low-order bit of the latch elements 101 corresponds to D0. That is, a bit-to-bit correspondence is maintained.

The above arrangement is adopted to make the bit numbers match between a word processing register in the processing controller 7 and the I/O information. This eliminates the need to rearrange data internally, thereby permitting high-speed processing. Furthermore, because the concept of digits is easily understood for arithmetic processing under this scheme, programming errors are minimized.

The first address decoding means 115 has the decoders 107 and 108 that receive outputs from the address lines 75, a bit/word control signal line 772 and a read signal line 773. These outputs cause one of the three-state buffers 103 - 106 to be selected.

As described, this embodiment has bit information transmitted via the selector 102 and three-state buffer 103, the selector selecting one of the eight bits in the latch elements 101, the buffer controlling the transmission of the selector output (i.e., bit information) onto the data lines 76. Word information is transmitted onto the data lines 76 via the the selector 102, the three-state buffer 103, and the three-state buffer 105 connected in parallel to the buffer 103. The same arrangement also applies to the first data transmission controlling means 116B. Upon bit or word information transmission, the data transmission controlling means 116A operates as follows:

In processing the sequence program stored in the program memory 8, the CPU 72 first tells the memory controller 74 to read the content of the user memory 8. The user memory 8 contains a program constituted by instruction words each comprising an instruction code and an I/O number shown in Fig. 8 (C). If the instruction code in an instruction word is for bit processing, a "0" is output onto the bit/word control signal line 772, and the content of the I/O number in the same instruction word is output to the address lines 75. Upon bit processing, the decoder 107 is enabled but the decoder 108 remains inactive. The output of the decoder 107 makes the three-state buffer 103 conductive so that the output of the selector 102 is transmitted to D7 of the data lines 76. The CPU 72 receives the output of the selector 102 via the memory controller 74 to carry out bit processing.

The external input device 3 and external load 4 connected to the input portion 11 and output portion 12 have their address numbers assigned to pieces of information on a one-on-one basis, as depicted in Fig. 7 (A). One address corresponds to eight bits of information. For bit processing, data in bit b7 is transmitted to D7 of the data lines 76. Because the input terminals of the three-state buffer 103, with the exception of the terminal admitting signals from the selector 102, are connected to ground, the output terminals corresponding to these input terminals are always supplied with output "0" information. In Fig. 3, the selector 102 is serially connected to the three-state buffer 104, the two being connected in parallel to the three-state buffer 106, the whole combination constituting and functioning as the data transmission controlling means 116.

If the instruction code in an instruction word is for word processing, a "1" is output onto the bit/word control signal line 772 and the content of the I/O number in the same instruction word is output onto the address lines 75. Upon word processing, the decoder 108 is enabled but the decoder 107 remains inactive.

The word information is 16 bits long, as illustrated in Fig. 8 (B). The information held by each of the latch elements 101 connected to the input portion 11 is eight bits long. Thus, as depicted in Fig. 7 (B), two addresses (byte address x 2) are assigned to each piece of word information, which is read in two passes by the CPU 72. In the first read pass, the decoder 108 selects the three-state buffer 105, and the content (X20 - X27) of the latch 101A (at address 0009 of Fig. 7 (B)) is transmitted onto the data lines 76. In the second read pass, the decoder 108 selects the three-state buffer 106 and the content (X30 - X37) of the latch 101B (at address 0010 of Fig. 7 (B)) is transmitted onto the data lines 76. The CPU 72 receives the word information via the memory controller 74 so as to perform word processing.

The construction and operation of the output side of the embodiment will now be described. The bit/word information selecting means 210A and 210B comprise selectors 109 and 110. The selector 109 selects and outputs one piece of information of the processing result from the memory controller 74 to D7 of the data lines 76. This output is effected when the selector 109 is selected by the address lines 75. The selector 110 selects one of two pieces of information (A, B). One input is connected to the selector 109 for bit information processing; the other input is connected to D0 - D7 of the data lines 76 for word information processing. The bit/word control signal line 772 causes either the bit or the word information that was input to be selected and output to output terminals Y0 - Y7.

The third address decoding means 315 comprises a decoder 111 and a selector 112. The decoder 111, under control of the address lines 75 and a write signal line 774, selects one of the output terminals designated by the memory controller 74. The selector 112, identical to the selector 110 in construction, selects either bit processing or word processing inn accordance with the signal from the bit/word control signal line 772.

The latch elements 113A and 113B, constituting the output memories, admit the output of the selector 110 as the input signal and receives a selecting signal output of the selector as the memory command signal upon latching the input information. That is, for bit processing, as shown in Fig. 7 (A), one piece of information is output to one address assigned thereto in the output portion 12. For word processing, one piece of information (byte address x 2) is output to two addresses assigned thereto in the output portion 12. The content stored in the latch elements 113 is supplied to the data memory 9 via the second data transmission controlling means 216A and 216B as well as through the data lines 76.

With this embodiment, as described, output information is stored whenever it is output during sequence program execution and transmitted immediately to the output portion 12. In this manner, the level of overall responsiveness regarding both input and output is significantly improved. For example, where I/O processing is carried out through a conventional image memory arrangement, it may take, say, 3 ms to process a sequence program illustratively comprising 1000 instructions, each instruction word being executed in 3 $\mu$s. If the time required for input/output processing is 2 ms, the total processing time is 5 ms. Since the I/O processing time takes up a large portion of the total processing time, the actual time required to input, process and output information is 5 $\mu$s per instruction word in this example.

With this embodiment, by contrast, the entire input processing time for the above example is a negligible 5 $\mu$s thanks to the use of the holding signal. The total processing time is 3 ms. That is, the actual time required to input, process and output information is 3 $\mu$s per instruction word.

Figs. 8 (A) and 8 (B) show how the word processing register in the processing controller 7 corresponds in units of bits to word information. That is, the high- to low-order bits are shown to be matched between the word processing register and the word information. Because one address is assigned to one piece of I/O information, it is easy to match the addresses to the I/O numbers in the sequence program. This eliminates the need to suitably develop addresses for processing, thereby boosting the speed of processing.

Fig. 3 illustrates the one-word (i.e., 16-bit) configuration of the embodiment according to the invention. As needed, the embodiment may be configured to accommodate a plurality of words of information. It is evident that the elements constituting the configuration of Fig. 3 may be incorporated into a small, inexpensive single chip of integrated circuits comprising gate arrays and others representing the elements. With this embodiment, the CPU 72 generates the holding signal. Alternatively, a separate electronic circuit may be used to generate the holding signal at the beginning of each scanning cycle.

While the preferred embodiment of the invention has been described using specific terms, such description is for illustrative purposes only, and it is to be understood that changes and variations may be made without departing from the sprit or scope of the following claims.

## Claims

1. A programmable controller system (PCS) comprising:

a first memory (73) for storing a system program;

a second memory (8) for storing a control program;

a processing unit (72) for carrying out processing in accordance with said control program;

an input portion (11) for receiving an input signal from an object of control; and

an output portion (12) for supplying an output signal to an external load;

characterised by an I/O controller (10) which contains:

holding signal generating means for generating an input information holding signal at the beginning of a scanning cycle; and

input holding means (101A, 101B) for holding input information from said input portion (11);

wherein said holding signal is supplied to said input holding means (101A, 101B) at the beginning of a scannin cycle so that said input information is being stored in said holding means during said scanning cycle.

2. The system of claim 1, wherein said holding signal generating means is constituted by said processing unit (72) which generates said holding signal in accordance with said system program stored in said first memory (73).

3. The system of claim 1 or 2, wherein said processing unit (72) is designed to read information held by said input holding means (101A, 101B) for processing.

4. The system of any of claims 1 to 3 wherein said input holding means is a set of latch elements (101A, 101B).

5. The system of any of claims 1 to 4, wherein said I/O controller (10) comprises:

first address decoding means (115) for generating a signal by which to select the address designated by said processing unit (72); and

first date transmission controlling means (116A, 116B) which, when selected by the signal generated by said first address decoding means (115), transmits said input information to a plurality of data lines (76) connected to said processing unit (72).

6. The system of any of claims 1 to 5, further comprising a third memory (9) for storing results of processing coming from said processing unit (72) wherein said I/O controller (10) includes:

an output memory (113A, 113B) for holding output information destined to said output portion (12);

second address decoding means (215) for generating a signal by which to select the address designated by said processing unit (72); and

second data transmission controlling means (216A, 216B) which, when selected by the signal generated by said second address decoding means (215), transmits said output information to a plurality of data lines (76) connected to said third memory (9);

said output information being stored in said third memory (9) under directions from said processing unit (72).

7. The system of claim 5, wherein said first address decoding means (115) comprises a decoder (107) for specifying bit processing and a decoder (108) for specifying word processing; and

wherein said first data transmission controlling means (116A, 116B) is constituted by the combination of bit selecting means (102) with on-off controllable gate means (103), said two means being serially connected to each other and transmitting bit information, and by on-off controllable gate means (104) for transmitting word information.

8. The system of claim 6, wherein said output memory is a set of latch elements (113A, 113B).

9. An input processing method for use with a programmable controller system (PCS) comprising:

a first memory (73) for storing a system program;

a second memory (8) for storing a control program;

a processing unit (72) for carrying out processing in accordance with said control program;

an input portion (11) for receiving an input signal from an object of control;

input holdings means (101A, 101B) for holding input information from said input portion;

holding signal generating means for generating an input information holding signal;

an output portion (12) for supplying an output signal to an external load; and

an I/O controller (10) for controlling signal exchanges between said input portion and said output portion;

characterised by the steps of:

causing said holding signal generating means to generate said input information holding signal at the beginning of scanning cycle; and

causing said I/O controller (10) to supply said input information holding signal to said input holding means (101A, 101B) at the beginning of said scanning cycle so that said input information is stored in said holding means during said scanning cycle.

# FIG. 1

# FIG. 4

8

# FIG. 2

# FIG. 3

# FIG. 5

# FIG. 6

# FIG. 7(a)

**BIT ADDRESS**

| ADDRESS | b7 | 6 | 5 | 4 | 3 | 2 | 1 | b0 |
|---------|-----|---|---|---|---|---|---|-----|
| 0000 | X0 | — | — | — | — | — | — | — |
| 0001 | X1 | — | — | — | — | — | — | — |
| 0002 | X2 | — | — | — | — | — | — | — |
| 000F | X17 | | | | | | | |
| 0010 | X20 | | | | | | | |
| 0080 | Y0 | — | — | — | — | — | — | — |
| 0081 | Y1 | — | — | — | — | — | — | — |
| 0082 | Y2 | — | — | — | — | — | — | — |

# FIG. 7(b)

**WORD ADDRESS**

| | b7 | 6 | 5 | 4 | 3 | 2 | 1 | b0 |
|------|-----|-----|-----|-----|-----|-----|-----|-----|
| 0000 | X17 | X16 | X15 | X14 | X13 | X12 | X11 | X10 |
| 0001 | X7 | X6 | X5 | X4 | X3 | X2 | X1 | X0 |
| 0009 | X27 | X26 | X25 | X24 | X23 | X22 | X21 | X20 |
| 0010 | X37 | X36 | X35 | X34 | X33 | X32 | X31 | X30 |
| 0080 | Y17 | Y16 | Y15 | Y14 | Y13 | Y12 | Y11 | Y10 |
| 0081 | Y7 | Y6 | Y5 | Y4 | Y3 | Y2 | Y1 | Y0 |

INPUT
OUTPUT

# FIG. 8(a)

WORD PROCESSING REGISTER

BIT 15        BIT 0

# FIG. 8(b)

WORD INFORMATION

BIT 15        BIT 0

| X37 | X36 | X35 | X34 | X33 | X32 | X31 | X30 | X27 | X26 | X25 | X24 | X23 | X22 | X21 | X20 |
|-----|-----|-----|-----|-----|-----|-----|-----|-----|-----|-----|-----|-----|-----|-----|-----|

# FIG. 8(c)

| OPERATION CODE | I / O NUMBER |
|----------------|--------------|